# EUROPEAN PATENT APPLICATION

(11) **EP 2 518 370 A1**
(43) Date of publication of application: **31.10.2012**
(21) Application number: 10838895.0
(22) Date of filing: 08.12.2010
(51) Int. Cl.: F16H 48/08

(54) **DIFFERENTIAL DEVICE**

(30) Priority: 22.12.2009 JP 2009290628
(71) Applicant: AISIN AI Co., Ltd., Nishio-shi Aichi-ken 445-0006 (JP)
(72) Inventor: MASUI, Yuuki, Nishio-shi Aichi 445-0006 (JP)
(74) Representative: Winter, Brandl, Fürniss, Hübner, Röss, Kaiser, Polte - Partnerschaft
(86) International application number: PCT/JP2010/007146
(87) International publication number: WO 2011/077655

(57) **Abstract**

A differential apparatus (11) according to the present invention is characterized in that it includes a ring gear (2) into which torques are input from a power source in order to rotate it, a pinion shaft (3) engaging with the ring gear (2) in one of rotary directions of the ring gear (2) in order to rotate integrally with the ring gear (2), pinion gears (41, 42) being supported rotatably to the pinion shaft (3), side gears (51, 52) meshing with the pinion gears (41, 42), and a case (6) rotating integrally with the ring gear (2) and the pinion shaft (3), and accommodating the pinion gears (41, 42) and the side gears (51, 52) in an inner side thereof.

## Description

### TECHNICAL FIELD

The present invention relates to a differential apparatus.

### BACKGROUND ART

Differential apparatuses, which are used for vehicle such as automobiles, have been available. A differential apparatus, namely, one which transmits torques from a power source, such as an engine, to a ring gear (11), a case (3), a pinion shaft (21), a pinion gear (19) and side gears (15, 17) in this order, has been known as disclosed in Patent Literature No. 1, for instance. The ring gear (11) is assembled with a flanged section (9) of the case (3) by bolts (13), whereas the pinion shaft (21) is assembled with the case (3). And, the pinion gear (19) is supported rotatably to the pinion shaft (21), and the pinion gear (19) and the side gears (15, 17) are meshed with each other.
Patent Literature No. 1: Japanese Unexamined Patent Publication (KOKAI) Gazette No. 6-58,378

### SUMMARY OF THE INVENTION

### Assignment to be Solved by the Invention

Since the aforementioned differential apparatus transmits the torques, which have been input into the ring gear, to the case by means of frictional forces that have been generated between the ring gear and the flanged section by means of axial forces of the bolts, it is costly to assemble the bolts that are involved or participated in the transmission of the torques, for example, fastening them highly accurately and strongly, and so on. Moreover, since the torques to be transmitted are transmitted by way of the case, there is such a problem as being costly because it is required for the case as well to exhibit strength that can withstand the torques to be transmitted, and to the frictional forces.

The present invention is one which has been done in view of the aforementioned assignments. It is therefore an assignment to be solved to provide a differential apparatus that makes it possible not only to simplify the assembly of the bolts, but also to simplify the case.

### Means for Solving the Assignment

A constitutional characteristic of the invention for solving the aforementioned assignment, invention which is directed to claim 1, lies in that it comprises:
a ring gear into which torques are input from a power source in order to rotate it;
a pinion shaft engaging with said ring gear in one of rotary directions of the ring gear in order to rotate integrally with the ring gear;
a pinion gear being supported rotatably to said pinion shaft;
a side gear meshing with said pinion gear; and
a case rotating integrally with said ring gear and said pinion shaft, and accommodating said pinion gear and said side gear in an inner side thereof.

Moreover, a constitutional characteristic of the invention for solving the aforementioned assignment, invention which is directed to claim 2, lies in that it comprises:
a ring gear into which torques are input from a power source in order to rotate it;
a case being capable of rotating integrally with said ring gear;
a pinion shaft being capable of rotating integrally with said case, and engaging with said ring gear, pinion shaft to which said torques are transmitted directly without interposing said case so that it rotates integrally with said ring gear;
a pinion gear being accommodated in said case, and being supported rotatably to said pinion shaft; and
a side gear being accommodated in said case, and meshing with said pinion gear.

Moreover, a constitutional characteristic of the invention that is directed to claim 3 lies in that, in claim 1 or 2, it further comprises an engagement retaining member for limiting movement of said ring gear in one of axial directions of the ring gear in order to retain engagement between the ring gear and the case.

Moreover, a constitutional characteristic of the invention that is directed to claim 4 lies in that, in either one of claims 1 through 3, said case comprises:
a body section for accommodating said pinion gear and said side gear in an inner side thereof; and
a fastener section having a circumferential part that protrudes from an outer peripheral face of said body section in a diametrically enlarging direction, thereby fastening said ring gear with said case in one of their rotary directions.

### Effect of the Invention

In the invention being directed to claim 1, the torques being input into the ring gear are transmitted directly to the pinion gear, because the ring gear and the pinion shaft engage one another in one of their rotary directions to rotate integrally with each other. Usually, in differential apparatuses with such a constitution, torques are transmitted to the pinion shaft as follows: torques, which have been input into the ring gear by means of a member that engages the ring gear with the case, are transmitted to the case as frictional forces; and then the case is rotated by means of the resulting frictional forces. However, in the differential apparatus according to the present application, the case is a member for accommodating the pinion and the side gear therein, and accordingly it is not a member that is involved or participated in the transmission of the torques directly, although it rotates integrally with the ring gear and the pinion shaft. Consequently, it is allowable to assemble the ring gear with the case so that they are not come off from one another by means of the torques, and so it is possible to simplify the assembly operation, that is, decreasing the number of members as well for fastening them, and so on. Moreover, since larger loads are not applied to the case, it is permissible that the strength of the case itself cannot be so high as those of the conventional ones, and so it is possible not only to make it feasible to simplify the case but also to cut down the weight, as well as to reduce expenses for the case.

In the invention being directed to claim 2, the torques being input into the ring gear are transmitted directly to the pinion gear without interposing the case, and hence it is not one in which the case is rotated by means of the frictional forces being generated between the ring gear and the case so that the pinion shaft rotates. Consequently, since it is not necessary to fasten members for fastening the ring gear with the case so highly accurately and strongly that they can transmit needed torques, it is possible to simplify the assembly operation. Moreover, since it is not necessary for the case to exhibit such strength that can withstand the frictional forces that have been generated so far, it becomes feasible to simplify the case, for example, making it of materials that are not of high strength or making it thinner in thickness, and so on.

In the invention being directed to claim 3, since the engagement retaining member is a member for maintaining engagement between the ring gear and the case in one of axial directions of the ring gear, the ring gear cannot be moved by axial forces that are generated by means of the torques being input into the ring gear, and hence the engagement between the ring gear and the case can be retained.

In the invention being directed to claim 4, the case is fastened with the ring gear by the fastener section that protrudes in a diametrically enlarging direction partially from an outer peripheral face of the body section that accommodates the pinion gear and said side gear in the interior. In a case in which powers, which the ring gear transmits by rotating, are received as frictional forces and are then transmitted to the pinion shaft, the case is consolidated with the ring gear by a flanged section that protrudes over the whole circumference. However, in accordance with the differential apparatus according to the present invention, since the fastener section (or the flanged section) is made of a circumferential part of the case that protrudes partially therefrom, it is possible to cut it down considerably. Thus, it is possible to make the case lightweight.

### BRIEF DESCRIPTION OF THE DRAWINGS

Fig. 1 is a partial cross-section diagram that illustrates the constitution of a differential apparatus 11 according to present Embodiment No. 1;
Fig. 2 is a partial cross-section diagram that illustrates the constitution of a differential apparatus 12 according to present Embodiment No. 2;
Fig. 3 is an explanatory diagram that illustrates some of the parts of a differential apparatus according to present Modified Embodiment No. 1; and
Fig. 4 is a partial cross-section diagram that illustrates the constitution of a differential apparatus 13 according to present Embodiment No. 3.

### Explanation on Reference Numerals

11, 12, 13: Differential Apparatus;
2: Ring Gear; 21; Gear Teeth; 22, 23, 24: Engaging Section; 25; Ring-gear Splined Section;
3: Pinion Shaft;
41: First Pinion Gear; 42: Second Pinion Gear;
51: First Side Gear; 51a, 52a: Axial Hole; 52: Second Side Gear;
6: Case; 60: Outer Peripheral Face; 61: Hole; 62, 63, 65, 66: Flanged Section (i.e., Fastener Section); 64: Body Section; 63: Case Splined Section; 69: Conventional Flanged Section;
7: Bolt (i.e., Engagement Retaining Member); 79: Conventional Bolt;
8: Snap Ring (i.e., Engagement Retaining Member);
91: First Driving Shaft; and 92: Second Driving Shaft

### MODE FOR CARRYING OUT THE INVENTION

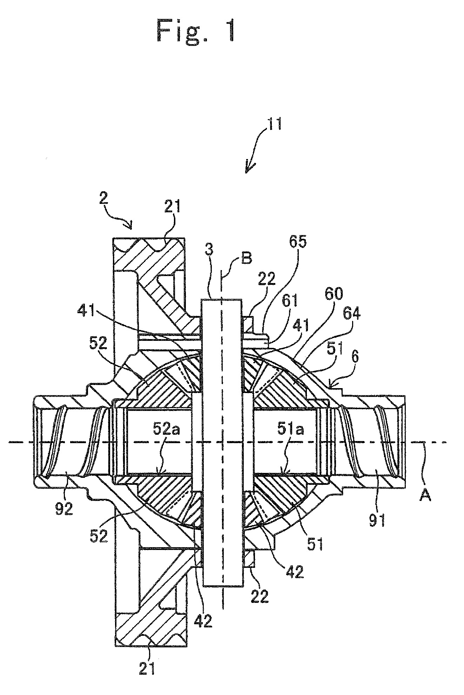

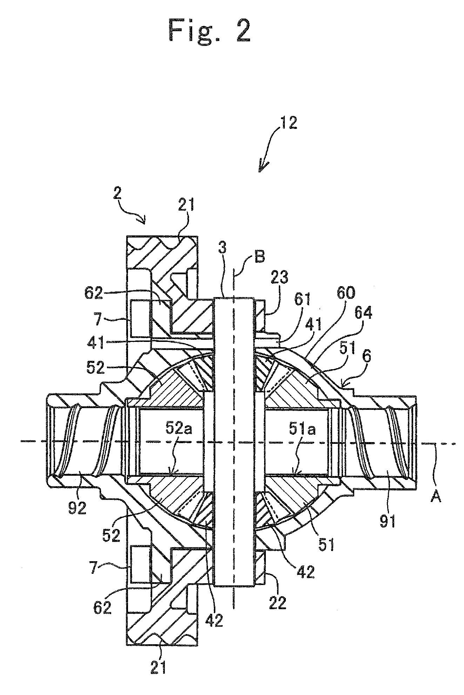

Some of representative embodiments according to the present invention will be explained with reference to Fig. 1 through Fig. 4. Present embodiments and a modified embodiment are a differential apparatus, respectively, into which torques from a power source are input in an automobile, and the like, which decelerates rotations, and which then distributes them to the right and left driving shafts (i.e., a first driving shaft 91, and a second driving shaft 92).

### (Embodiment No. 1)

As illustrated in Fig. 1, a differential apparatus 11 according to present Embodiment No. 1 comprises a ring gear 2, a pinion shaft 3, pinion gears (i.e., a first pinion gear 41, and a second pinion gear 42), side gears (i.e., a first side gear 51, and a second side gear 52), and a case 6.

The ring gear 2 rotates by means of torques from a power source while centering about an axial center "A" as the rotary axis, and is a helical gear whose gear teeth 21 are formed on the outer periphery. And, it comprises an engaging section 22 whose inner peripheral part protrudes more than the tooth width between the gear teeth 21 in one of the rotary-axis directions, and which consolidates with the pinion shaft 3 being described later so as to be rotatable integrally with the pinion shaft 3.

The case 6 is placed on an inner peripheral side of the ring gear 2 where it is located on a more inner peripheral side than is the engaging section 22; and comprises a body section 64, and a flanged section (i.e., fastener section) 65. The body unit 64 accommodates the later-described first and second pinion gears (42, 42) and the later-described first and second side gears (51, 52) therein. The flanged section 65 protrudes from an outer peripheral face 60 of the body section 64 in a diametrically enlarging direction, and engages with the engaging section 22 in the rotary directions. And, the flanged section 65 is provided with a plurality of holes 61, which are formed at equal intervals in the circumferential direction and into which pins (not shown in the drawing) are inserted; and is engaged with the later-described pinion shaft 3 by means of the pins. When the ring gear 2 rotates, the case 6 rotates about the axial center "A," which serves as the rotary axis of the ring gear 2, as the rotary axis.

The pinion shaft 3 is a rotary member whose rotary axis is the axial center "A" that serves as the rotary axis of the ring gear 2; is consolidated with the engaging section 22 of the ring gear 2; and is moreover engaged with the case 6 as well. When torques are transmitted to the ring gear 2 to rotate it, those torques are transmitted directly to the pinion shaft 3, and thereby the pinion shaft 3 rotates integrally with the pinion shaft 3. The case 6 rotates as being accompanied by the rotating ring gear 2 and pinion shaft 3.

The first and second pinion gears (41, 42) are a bevel gear whose rotary axis is an axial center "B" that crosses with the axial center "A" orthogonally; and are supported rotatably to the pinion shaft 3, respectively. With use of the axial center "A" as the symmetrical line, the first pinion gear 41, and the second gear 42 are separated into two elements, respectively; and are then accommodated inside the body section 64 of the case 6. The first and second pinion gears (41, 42) can rotate in opposite directions to each other about the axial center "B" that serves as the rotary axis. Their rotations about the axial center "B" serving as the rotary axis will be referred to as a "rotation," respectively, whereas their rotations about the axial center "A" serving as the axial center, in which they are rotated by the rotating pinion shaft 3, will be referred to as a "revolution," respectively.

The first and second side gears (51, 52) are a bevel gear that meshes with the first and second pinion gears (41, 42), respectively; and which has a rotary axis that crosses orthogonally with those of the first and second gears (41, 42). An opposite end of the first driving shaft 91, in which the axial center "A" makes the rotary axis, and an opposite end of the second driving shaft 92, in which the axial center "A" makes the rotary axis, are engaged coaxially with an axial hole 51a of the first side gear 51 and an axial hole 52a of the second side gear 51, respectively, by means of splined structure, and the like, and thereby each of them can rotate integrally. The first and second side gears (51, 52) are separated from one another, with use of the axial center "B" as the symmetrical line, to accommodate them inside the body section 64 of the case 6.

In the differential apparatus 11 according to present Embodiment No. 1, the ring gear 2 rotates about the axial center "A" serving as the rotary axis by means of torques that have been transmitted from a power source, and then the pinion shaft 3 rotates. At the same time, the case 6 rotates, whereas the first and second pinion gears (41, 42) "revolve." When the first and second pinion gears (41, 42) "revolve," the first and second driving shafts (91, 92), which engage with the first and second side gears (51, 52) meshing with those above, rotate about the axial center "A" serving as the rotary axis. In this way, the torques, which have been input into the ring gear 2, are transmitted to the pinion shaft 3; rotate the first and second side gears (51, 52) by means of "revolving" the first and second pinion gears (41, 42); and are then transmitted to the first and second driving shafts (91, 92). Note that, in a case where the first and second pinion gears (41, 42) do not "rotate," the revolving speeds of the pinion shaft 3 become identical with the revolving speeds of the first and second driving shafts (91, 92). In the process where the torques having been input into the ring gear 2 are transmitted to the first and second driving shafts (91, 92), the first and second side gears (51, 52), and the first and second driving shafts (91, 92) engaging with these rotate relatively in opposite directions with respect to the pinion shaft 3 when the first and second pinion gears (41, 42) "rotate" in opposite directions to each other about the axial center "B" serving as the rotary axis. That is, it comes to rotate one of the first and second driving shafts (91, 92) at a high revolving speed compared with that of the pinion shaft 3, and to rotate the other one of them at a low revolving speed compared with that of the case 6.

Inthisway, the differential apparatus 11 can absorb the revolving-speed differences, which occur between the first driving shaft 91 and the second driving shaft 92, by "rotating" the first and second pinion gears (41, 42) in opposite directions to each other about the axial center "B" in a case where automobiles circle around, such as in the case where the revolving speeds differ between the first driving shaft 91 and the second driving shaft 92.

In accordance with the differential apparatus 11 according to present Embodiment No. 1, torques having been input into the ring gear 2 are transmitted directly to the pinion shaft 3 because the ring gear 2 and the pinion 3 consolidate one another to rotate integrally. Usually, in differential apparatuses with such a constitution, torques, which have been input into the ring gear by means of members that engage the ring gear with the case, are transmitted to the case as frictional forces, and are then transmitted to the pinion shaft by rotating the case by means of the resulting frictional forces. However, in the differential apparatus 11, the case 6 is a member for accommodating the first and second pinion gears (41, 42) and the first and second side gears (51, 52), and is not all a member that is directly responsible for the transmission of the torques. Consequently, it is allowable to assemble the ring gear 2 with the case 6 to such an extent that they do not come off from one another by means of torques. For example, it is not necessary to fasten them strongly and highly accurately, and it is possible to decrease the number of members (e.g., bolts, and the like) for fastening them, and so it is possible to simplify the assembly operation, and accordingly it is possible to reduce costs as being accompanied therewith. Alternatively, since no large loads are applied to the case at all, it is permissible that the strength of the case itself can also be one that is not so high as those of conventional ones, and so it is possible to simplify the case. By means of the simplification, it is possible to cut down costs for the case by making the case into inexpensive ones that are made of materials with no high strength, and so on, or by making the case thinner in the thickness in order to reduce the weight, for instance.

### (Embodiment No. 2)

A differential apparatus 12 according to present Embodiment No. 2 comprises the same constitution, and the same operations and advantages basically as those of the differential apparatus 11 according to Embodiment No. 1. Hereinafter, explanations will be made while centering on distinct parts.

The ring gear 2 comprises an engaging section 23 whose inner peripheral part protrudes more than the tooth width between the gear teeth 21 in one of the rotary-axis directions and which consolidates with the pinion shaft 3 so as to be capable of rotating integrally with it, and bolt holes into which bolts (i.e., engagement retaining members) 7. The bolt holes are present at a part in the engaging section 23, respectively, and are formed in a plurality of pieces at equal intervals in the circumferential direction so that the bolts 7 are inserted into them in one of the directions of the axial center "A."

In the case 6, a flanged section (or fastener section) 62 is formed so that the bolts 7 can be inserted into the bolt holes at the same positions as those of the bolt holes in the ring gear 2.

In accordance with the differential apparatus 12 according to Embodiment No. 2, it is possible to retain the engagement between the ring gear 2 and the case 6 by the bolts 7. Consequently, the engagement is not disengaged, because the movements of the ring gear 2 are restricted by means of axial forces that occur in the directions of the axial center "A" when torques are input into a helical gear, namely, into the ring gear 2. Moreover, the bolts 7 can also support the axial forces.

The bolts, which have been used in order to engage the conventional ring gear 7 and case 6 with each other, have been set by a strong fastening force in order to transmit torques to the case 6. However, in the differential apparatus 12, since it is allowable that the bolts 7 can simply support the axial forces that occur in the ring gear 2, no such a strong fastening force is needed, and the number of their pieces can be decreased. Consequently, it is possible to intend cutting down costs for the assembly operation, and making the weight lightweight by means of cutting down the component parts.

(Modified Embodiment No. 1 of Embodiment No. 2) A differential apparatus according to Modified Embodiment No. 1 comprises the same constitution, and the same operations and advantages basically as those of the differential apparatus 12 according to Embodiment No. 2. Hereinafter, explanations will be made while centering on distinct parts.

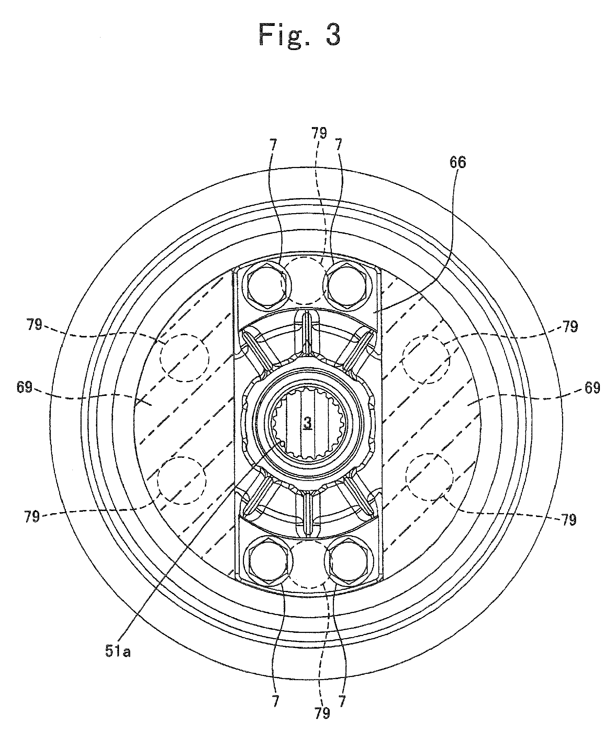

As illustrated in Fig. 3, in the case 6 that is used in the differential apparatus according to Modified Embodiment No. 1, some of the circumferential part makes a flanged section 66. The case 6 is fastened with the ring gear 6 by means of the bolts 7 at four locations, that is, at upper two locations and lower two locations (the "up and down" being meant those in Fig. 3). The double-dashedbroken lines in Fig. 3 specify where a conventional flanged portion 69 has been present, and the broken lines specify the positions of conventional bolts 79. In the differential apparatus according to present Modified Embodiment No. 1, it is possible to make the case 1 lightweight because it is possible to cut down the flanged section considerably. Moreover, since the number of the bolts 7 for fastening has also been decreased, the quantity of component parts can be reduced, and so costs for the assembly operation declines as well.

And, it is possible to use the structure of the flanged section 66 in the case 6 that is used in the differential apparatus according to present Modified Embodiment No. 1 as the case 6 for the differential apparatus 11 according to above-mentioned Embodiment No. 1, and for a differential apparatus 13 according to later-described Embodiment No. 3.

Moreover, the flanged section 69 is not limited to two circumferential parts, but can be formed as such a configuration that protrudes in diametrically directions in an amount of three, four, and so on.

### (Embodiment No. 3)

A differential apparatus 13 according to present Embodiment No. 3 comprises the same constitution, and the same operations and advantages basically as those of the differential apparatus 11 according to Embodiment No. 1. Hereinafter, explanations will be made while centering on distinct parts.

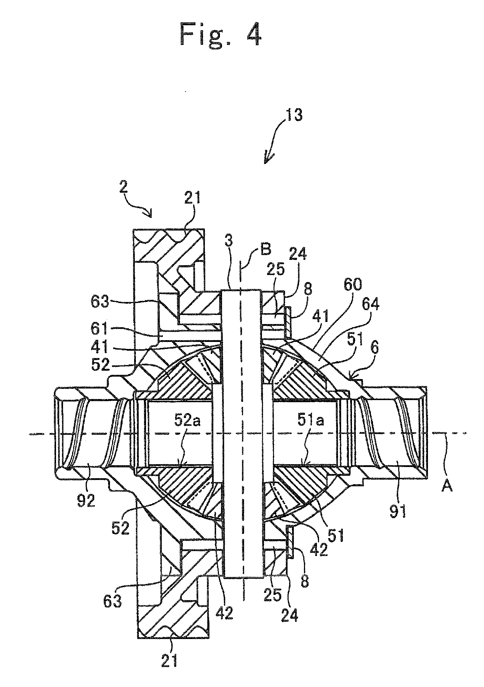

As illustrated in Fig. 4, the ring gear 2 comprises an engaging section 24 whose inner peripheral part protrudes more than the tooth width between the gear teeth 21 in one of the rotary-axis directions and which consolidates with the pinion shaft 3 so as to be capable of rotating integrally with it, and a ring-gear splined section 25 on the inner periphery.

In the case 6, a flanged section (i.e., fastener section) 63, which engages with the ring-gear splined section 25 by means of spline, on the external part that faces to the inner-periphery side of the ring gear 2.

In one of the axial directions of the axial center "A," a snap ring (i.e., engagement preventing member) 8 is disposed at one of the opposite end sides of the engaging section 24 and flanged section 63 so that it pinches up around some of the external shape in the case 6. That is, the snap ring 8 is put in place at a position where it faces to axial forces of the ring gear 2 so as not to let the axial forces, which occur upon inputting torques into the ring gear 2, move the ring gear 2 in the directions of the axial center "A" to detach the engagement between the ring gear 2 and the case 6.

In accordance with the differential apparatus 13 according to present Embodiment No. 3, since it is possible for the snap ring 8 to retain the engagement between the ring gear 2 and the case 6, it is possible for the snap ring 8 to prevent the engagement from being come off by means of the axial forces that occur in the directions of the axial center "A" when torques are input into a helical gear, namely, into the ring gear 2. Moreover, it is also possible for the snap ring 8 to support the axial forces.

The bolts, which have been used in order to engage the conventional ring gear 2 and case 6 with each other, have been set by a strong fastening force in order to transmit torques to the case 6 as frictional forces. However, in the differential apparatus 13, since the torques having been input into the ring gear 2 are transmitted to the pinion shaft 3 without any intervention of the case 6, it is not necessary to fasten the ring gear 2 and the case 6 one another strongly. Hence, since it is possible to cut down the number of the bolts, and since it is not necessary to tighten the bolts strongly, it is possible to reduce assembly costs that have been associated with the issues, like the decrease in the quantity of component parts and the strong fastening, and so on.

Although explanations have been made on some of preferred embodiments according to the present invention so far, the present invention is not at all one which is limited to the aforementioned embodiments. For example, although the ring gear 2 comprises the engaging section 22, 23, or 24 that protrudes in one of the axial directions, it is also allowable that it can even be one having a configuration in which an outer peripheral section of the gear teeth 21 is extended in one of the axial directions as well by such a length that is needed in order to engage with the pinion shaft 3.

## Claims

1. A differential apparatus being **characterized in that** it comprises:
a ring gear into which torques are input from a power source in order to rotate it;
a pinion shaft engaging with said ring gear in one of rotary directions of the ring gear in order to rotate integrally with the ring gear;
a pinion gear being supported rotatably to said pinion shaft;
a side gear meshing with said pinion gear; and
a case rotating integrally with said ring gear and said pinion shaft, and accommodating said pinion gear and said side gear in an inner side thereof.

2. A differential apparatus being **characterized in that** it comprises:
a ring gear into which torques are input from a power source in order to rotate it;
a case being capable of rotating integrally with said ring gear;
a pinion shaft being capable of rotating integrally with said case, and engaging with said ring gear, pinion shaft to which said torques are transmitted directly without interposing said case so that it rotates integrally with said ring gear;
a pinion gear being accommodated in said case, and being supported rotatably to said pinion shaft; and
a side gear being accommodated in said case, and meshing with said pinion gear.

3. The differential apparatus as set forth in claim 1 or 2 further comprising an engagement retaining member for limiting movement of said ring gear in one of axial directions of the ring gear in order to retain engagement between the ring gear and the case.

4. The differential apparatus as set forth in either one of claims 1 through 3, wherein said case comprises:
a body section for accommodating said pinion gear and said side gear in an inner side thereof; and
a fastener section having a circumferential part that protrudes from an outer peripheral face of said body section in a diametrically enlarging direction, thereby fastening said ring gear with said case in one of their rotary directions.
